# DEMANDE DE BREVET EUROPEEN

(11) **EP 0 936 800 A1**
(43) Date de publication de la demande: **18.08.1999**
(21) Numéro de dépôt: 99400329.1
(22) Date de dépôt: 11.02.1999
(51) Int. Cl.: H04N 1/00

(54) **Télécopieur de commande d'un moniteur de visualisation de télécopies**

(30) Priorité: 11.02.1998 FR 9801606
(71) Demandeur: SAGEM SA, 75116 Paris (FR)
(72) Inventeur: Nicaise, Pierre, 60580 Coye La Foret (FR); Sabatier, Pierre, 95800 Cergo Saint Christophe (FR)
(74) Mandataire: Bloch, Gérard

(57) **Abrégé**

Le télécopieur comporte un pupitre (9) de commande de circuits de composition de texte (11, 12, 13) commandant un moniteur (2) à travers des circuits d'adaptation (14 - 16; 26 - 32; 34, 35; 115, 116) reliés à des circuits (4) de liaison avec le moniteur (2).

## Description

Pour saisir une image de télécopie, un télécopieur comporte un dispositif d'analyse optique, ou scanner, de documents papier. De par leur grande diffusion, les télécopieurs sont en pratique souvent utilisés comme appareils universels pour transmettre, outre des images quelconques "analogiques", des images normalisées de symboles et de caractères, comme du texte.

A cet effet, sont apparues sur le marché des cartes "télécopieurs" pour PC. On peut ainsi composer, à l'écran de celui-ci, un texte et éventuellement des dessins et les transformer par logiciel en une image de pixels, que l'on émet. La conversion caractères de texte/pixels étant effectuée par logiciel, elle n'entraîne pas les défauts de saisie intervenant classiquement avec un scanner.

Cette composition d'image de télécopie nécessite cependant de disposer d'un PC. La présente invention vise à s'affranchir de cette nécessité.

A cet effet, l'invention concerne un télécopieur comportant un pupitre de commande de moyens de composition de texte agencés pour commander un moniteur à travers des moyens d'adaptation reliés à des moyens de liaison avec le moniteur.

Ainsi, le moniteur complète le télécopieur pour visualiser, sur un écran de grande taille, une image de télécopie lors de sa composition à partir du pupitre, si bien que l'utilisateur du télécopieur dispose de tous les moyens de relation homme-machine, en entrée et sortie, utiles à une exploitation aisée de la fonction d'édition de texte. Par le mot texte, on comprendra qu'on désigne globalement tout ensemble de caractères ou symboles, sans que ceux-ci soient obligatoirement des lettres ou chiffres.

L'invention sera mieux comprise à l'aide de la description suivante d'une forme de réalisation préférée du téléviseur selon l'invention et d'une variante, en référence au dessin annexé, sur lequel:
- la figure 1 représente schématiquement, selon l'invention, un télécopieur et un récepteur de télévision reliés ensemble;
- la figure 2 est un schéma global par blocs fonctionnels du télécopieur
- la figure 3 explicite, de façon plus détaillée, le schéma de la figure 2, et
- la figure 4 est un schéma par blocs spécifique à la variante.

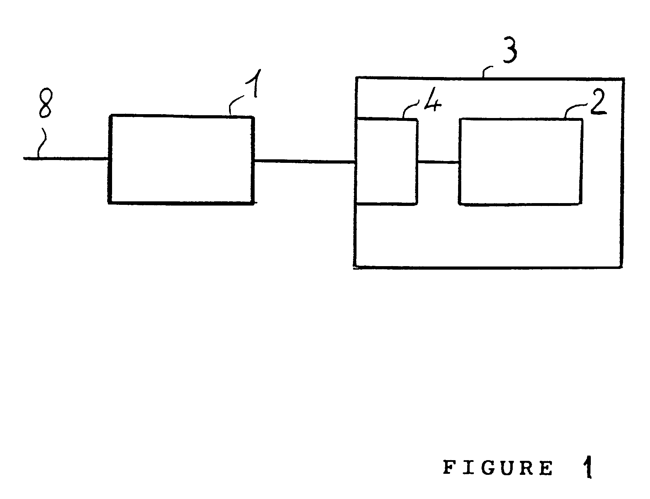

Sur la figure 1 est représenté un ensemble constitué d'un télécopieur 1, relié à une ligne 8 du réseau téléphonique, et d'un moniteur 2, appartenant ici à un récepteur de télévision 3, reliés par une liaison vidéo comportant une prise 4 de la marque protégée PERITEL.

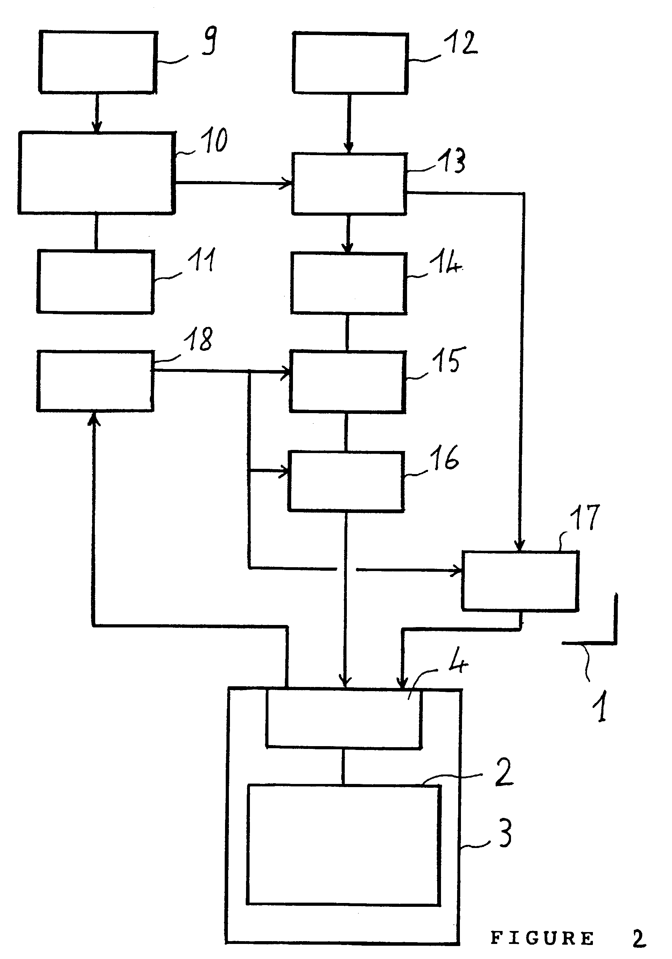

La figure 2 illustre les fonctions du télécopieur 1. Celui-ci comporte des circuits classiques 10 d'un télécopieur, tels qu'unité centrale à microprocesseur, reliés à une mémoire d'image pixels il et un clavier ou pupitre 9. Le télécopieur 1 comporte en outre une chaîne de circuits comprenant, dans le sens de transmission des données, des circuits d'édition 12, des circuits 13 de mise en page, ou composition, des circuits 14 de conversion pixels télécopie/pixels moniteur et un circuit 15 de commande d'un convertisseur numérique/analogique 16 relié à la prise 4, ces trois derniers circuits 14-16 effectuant l'adaptation de l'image pixels de type télécopie pour commander le moniteur 2.

Les circuits 13 commandent en outre des circuits 17 d'incrustation d'image commandant le moniteur 2 à travers la prise 4. Un circuit base de temps 18 est asservi ici sur le moniteur 2, à travers la prise 4, et commande les circuits 15, 16 et 17.

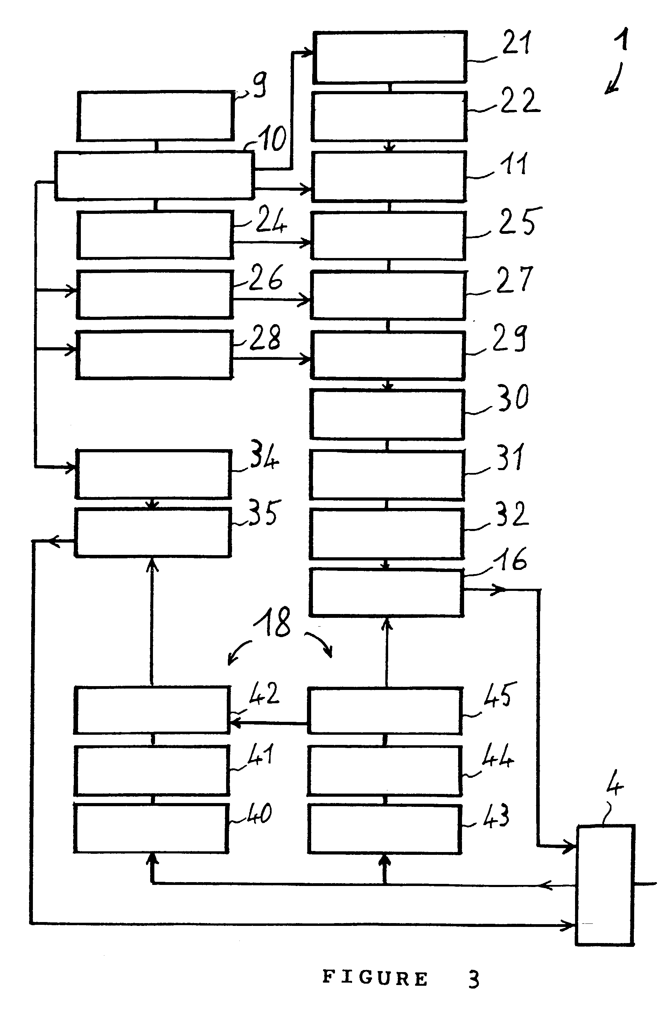

La figure 3 illustre plus en détails les circuits ci-dessus.

L'ensemble de circuits 10 commande les circuits 12 et 13, comportant un circuit 21 de choix de police et de positionnement de caractères pour composer une page ou une zone limitée, ou fenêtre, à partir du pupitre 9. Par un circuit de gestion de pointage 22, une image ainsi composée est mémorisée dans la mémoire 11 de télécopies. Un circuit 24, commandé par le pupitre 9, commande le défilement de plusieurs images ainsi mémorisées et la sélection de l'une d'elles par un circuit 25.

Un circuit 26 assure le cadrage de l'image, ou fenêtre, télécopie dans une page et commande une mémoire 27 recevant, du circuit 25, l'image sélectionnée.

Un circuit 28 assure le cadrage au format d'une image vidéo pour le moniteur 2 et commande à cet effet une mémoire 29 recevant l'image, cadrée "télécopie", de la mémoire 27.

La taille de l'image de la mémoire 29, cadrée au format du moniteur 2 est ensuite modifiée par changement de résolution dans un circuit 30 afin de l'adapter à la taille de l'écran du moniteur 2, ayant ici 480 pixels par ligne, alors qu'une image télécopie classique comporte 1728 pixels par ligne. Le circuit 30 échantillonne les pixels de lignes de la zone de texte selon des intervalles réguliers, de taille fonction du changement voulu de résolution, par exemple un pixel tous les cinq (facteur 0,2) s'il faut incruster toute une ligne de 1728 pixels dans 400 pixels "vidéo".

En outre, hormis le rapport entre les résolutions respectives du télécopieur 1 et du moniteur 2, le changement de résolution de la fenêtre à afficher peut prendre en compte un choix de grossissement relatif de cette fenêtre. Par exemple, une fenêtre de taille restreinte pourra être affichée directement, sans diminution de sa résolution par le facteur 1728/400 d'adaptation à l'écran 2, c'est-à-dire que sa taille relative (une fois affichée) sera en fait un peu plus de quatre fois supérieure au reste, vidéo, de l'image. Un circuit aval 31 effectue une opération de transformation vidéo inverse pour alimenter une mémoire 32 de trame TV binaire commandant le circuit convertisseur 16, alimentant, à travers la prise 4, le moniteur 2 en signaux classiques.

L'unité centrale 10 commande un circuit 34 de cadrage permettant de repérer la position occupée par la fenêtre d'image télécopie/texte à afficher à un format déterminé du moniteur 2. Plus précisément, pour un nombre déterminé (480) de pixels par ligne d'écran 2, le circuit 34 détermine, à partir des coordonnées de deux angles opposés de la fenêtre (supposée ici verticale et rectangulaire et pointée à partir du pupitre 9 ou d'une souris) dans l'image de la mémoire 29, les rangs des pixels qui correspondent à cette fenêtre et qu'il faut incruster par substitution dans une image vidéo (quelconque) reçue par une antenne du téléviseur 3.

Le circuit 34 alimente une entrée d'un comparateur 35 de commande d'incrustation, appartenant aux circuits 17 fournissant alors un signal F de synchronisation trame au moniteur 2 à travers la prise 4.

En sens inverse, l'antenne recevant un signal vidéo classique de télévision diffusée, avec donc un signal S de synchronisation, fournit celui-ci, à travers la prise 4, aux circuits base de temps 18 de synchronisation du télécopieur 1, afin d'incruster la fenêtre image de télécopie en synchronisme avec l'image vidéo de l'antenne et donc de la cadrer à l'endroit voulu, par segments de lignes de pixels successives, dans chaque ligne concernée.

Plus précisément, le signal S est transmis, dans les circuits 18, à un circuit 40 de synchronisation trame et à un circuit 43 de synchronisation ligne. On rappellera que, dans une image vidéo à la norme SECAM par exemple, chaque signal analogique de ligne est précédé d'une plage comportant une impulsion, de durée calibrée, de synchronisation ligne. De même, une image vidéo est précédée d'une impulsion calibrée, plus large, de synchronisation trame. Les circuits 40 et 43 détectent respectivement, à chaque image, l'impulsion longue et les impulsions plus courtes de ligne et commandent des circuits respectifs 41 et 44 de mise en forme (logique) de ces impulsions, qui synchronisent deux circuits respectifs 42 et 45, circuit 42 de comptage de lignes et de pixels dans chaque ligne et circuit 45 d'horloge interne pixel, recalée par la synchronisation ligne, commandant le circuit 42 et le circuit convertisseur 16.

On conçoit qu'il aurait pu être prévu que le moniteur 2 ne reçoivent pas de signaux d'image diffusés reçus par l'antenne d'un téléviseur ou qu'on le commute exclusivement sur la prise 4. Dans ce cas, le télécopieur 1 comporterait des moyens classiques pour engendrer des trames de signaux synchronisant le moniteur 2 et ses propres circuits 18, en substitution du signal S provenant de l'antenne. Il n'y aurait pas non plus à proprement parler d'incrustation de l'image télécopie dans une image vidéo, faute de cette dernière, mais simplement affichage de l'image télécopie, avec encore le grossissement et le cadrage voulus, entourée d'un cadre uniforme.

Il pourrait être prévu de ne pas modifier la taille ou résolution de l'image télécopie visualisée et de simplement déplacer celle-ci par balayage dans une fenêtre de visualisation sur l'écran 2.

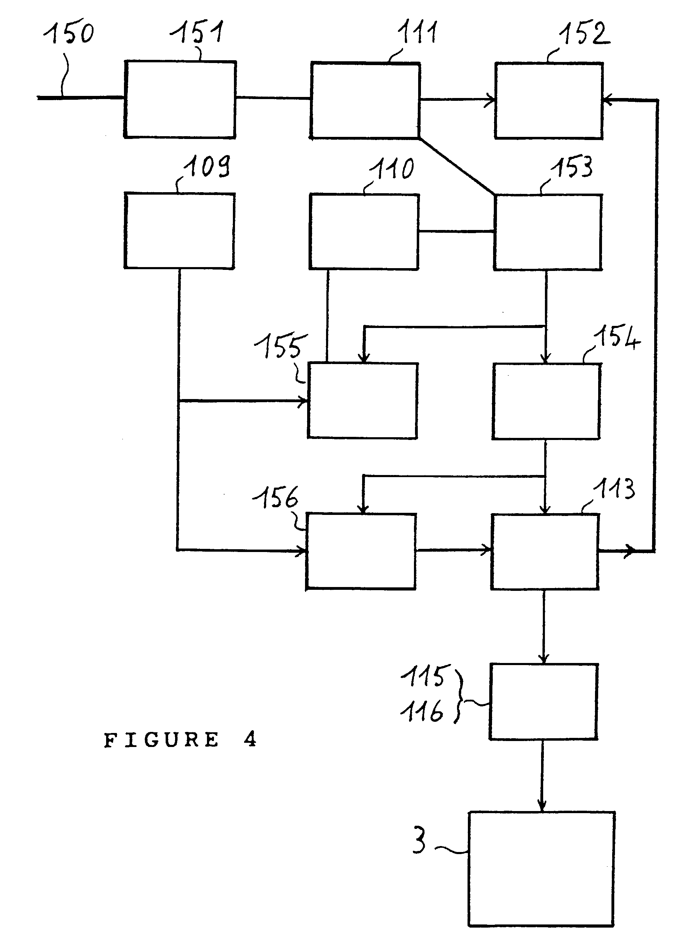

Dans la variante de la figure 4, le télécopieur comporte des circuits 155 de navigation sur un réseau de transmission de données comme l'INTERNET. Sur cette figure, sur laquelle seuls ont été représentés les circuits liés à la navigation sur l'INTERNET et l'exploitation des données ainsi obtenues de divers serveurs, les éléments existant aussi sur la figure 2 conservent la référence qu'ils y portent, précédée de la centaine 1.

Le télécopieur comporte un modem 151 de liaison à une ligne téléphonique 150, relié à la mémoire 111 de stockage de données transmises, elle-même reliée à une imprimante 152 et à un circuit 153 de traitement de pages de données INTERNET au format HTML. Le microprocesseur 110 contrôle l'ensemble des circuits du télécopieur. Le circuit 153 alimente en données INTERNET un circuit 154 de conversion de caractères de texte, présentés par exemple en code ASCII, en une matrice de points et aussi de conversion d'images en matrice de points. Les circuits de navigation 155 reçoivent aussi ces données et sont en liaison avec le microprocesseur 110 pour en particulier gérer le modem 151.

Le circuit de conversion 154 transmet les données INTERNET reçues en matrice de points, ou pixels, au circuit 113 de mise en page, traitant ici des pixels, qui alimente les circuits 115, 116 de conversion numérique/analogique commandant le moniteur du téléviseur 3 par un signal vidéo.

Le pupitre 109, avec touches ou souris de navigation, commande les circuits 155 de navigation et un circuit 156 de gestion de visualisation, alimenté en données d'image par le circuit 154, ces derniers commandant le circuit 113, relié en sortie à l'imprimante 152.

Le fonctionnement du télécopieur de la figure 4 va être expliqué ci-dessous.

Outre les télécopies sur le réseau téléphonique, le télécopieur, à fonction de PC, est apte à échanger des textes de courrier électronique à travers l'INTERNET, auquel il se raccorde à travers un serveur d'accès par la ligne 150 et à appeler des serveurs INTERNET. Les télécopies peuvent de même traverser l'INTERNET en transparence, sous forme par exemple de "pièce jointe" encapsulée dans un message de courrier électronique, ou encore par un transcodage adapté.

Le télécopieur peut ainsi, sous la commande du circuit de navigation 155, contenant le logiciel de gestion des communications sur l'INTERNET, appeler des serveurs de celui-ci pour établir une liaison et en recevoir des pages d'hypertexte au format HTML, pour les stocker dans la mémoire 111, servant alors à stocker aussi des pages HTML en plus du courrier et des télécopies. Une page à ce format est destinée à être affichée sur l'écran vidéo d'un PC et comporte des zones de caractères de texte (codage ASCII), des zones d'image et des zones d'adresse d'autres serveurs destinées à être pointées par le pupitre 109, pour naviguer en fonction des informations présentées à l'écran et qui indiquent les serveurs correspondants, dont les adresses sont sélectionnables par les zones d'adresses respectives les désignant. Une page HTML ainsi reçue est analysée par le circuit 153 qui détermine les positions respectives des zones à caractères ASCII de texte et les zones d'image.

Les deux groupes de zones sont alors convertis de façon appropriée par le circuit 154 et le circuit aval 113 recompose alors la page, d'après les diverses positions de zones, sous la forme de matrice de pixels, pour l'afficher ensuite sur le téléviseur 3 sous forme vidéo, à travers les circuits 115, 116. Une page de courrier électronique (ASCII) peut de même être affichée.

Le circuit 156 permet, depuis le pupitre 109, de modifier, si on le souhaite, l'image vidéo, HTML ou courrier, affichée. Le détail de la gestion de l'image affichée et des modifications qui peuvent y être apportées a été exposé pour la variante précédente, relativement aux télécopies, et reste valable ici. Cette image peut en outre être imprimée (152) à partir du circuit 113.

Ainsi, le télécopieur intègre la fonction de décodeur INTERNET pour téléviseur, tout en offrant la fonction imprimante.

Les commandes pour la navigation et l'impression peuvent en outre être effectuées à partir d'un boîtier de télécommande portatif, par exemple à infrarouge. De même, le télécopieur peut être raccordé à la ligne 150 à travers une base radio reliée par fil à la ligne et gérant un réseau radio domotique, par exemple à la norme DECT, à travers lequel le télécopieur se raccorde à la base.

## Revendications

1. Télécopieur comportant un pupitre (9) de commande de moyens de composition de texte (11, 12, 13; 111, 113; 21, 22, 24, 25) agencés pour commander un moniteur (2) à travers des moyens d'adaptation (14 - 16; 26 - 32; 34, 35; 115, 116) reliés à des moyens (4) de liaison avec le moniteur (2).

2. Télécopieur selon la revendication 1, dans lequel il est prévu des moyens (40 - 45) de récupération d'un signal de synchronisation d'image fournis par un récepteur (3) de télévision comportant le moniteur (2) à travers les moyens de liaison, moyens de récupération (40 - 45) agencés pour synchroniser les moyens d'adaptation (14 - 16; 26 - 32; 34, 35) sur ledit signal de synchronisation.

3. Télécopieur selon la revendication 2, dans lequel les moyens (40 - 45) de récupération du signal de synchronisation comportent des moyens de comptage de pixels (42) commandés par un oscillateur (45) à phase asservie sur ledit signal de synchronisation, moyens de comptage (42) agencés pour commander, dans les moyens d'adaptation, des moyens (34, 35) d'incrustation de segments de lignes de pixels successives dans une image vidéo.

4. Télécopieur selon la revendication 3, dans lequel les moyens d'incrustation comportent des moyens comparateurs (35) agencés pour comparer la sortie des moyens de comptage (42) à des valeurs déterminées de rang de pixels dans une ligne et pour commander l'incrustation des pixels correspondants en cas de concordance.

5. Télécopieur selon l'une des revendications 1 à 4, dans lequel les moyens de composition comportent des moyens (28 - 30) de cadrage d'une zone de texte dans une image à un format déterminé du moniteur (2).

6. Télécopieur selon la revendication 5, dans lequel les moyens de cadrage comportent des moyens (30) de changement de la définition de la zone de texte, agencés pour échantillonner des pixels de lignes de la zone de texte selon des intervalles réguliers, de taille fonction du changement de résolution.

7. Télécopieur selon l'une des revendications 1 à 6, dans lequel les moyens de composition du texte (111, 113) sont agencés pour traiter des pages de données au format HTML fournies par des circuits (153, 155) de liaison à un réseau de transmission de données et de navigation sur celui-ci.

8. Télécopieur selon la revendication 7, dans lequel les moyens d'adaptation (115, 116) sont agencés pour commander une imprimante (152) de recopie d'une image affichée sur le moniteur (2).
